# EUROPEAN PATENT APPLICATION

(11) **EP 4 763 467 A1**
(43) Date of publication of application: **24.06.2026**
(21) Application number: 24220794.2
(22) Date of filing: 17.12.2024
(51) Int. Cl.: B29C 45/14, B29C 45/80, B65D 47/10

(54) **INJECTION MOLDING METHOD FOR PRODUCING A COMPONENT WITH AN OPENING CLOSED BY A COVER ELEMENT AND MOLDING ARRANGEMENT**

(71) Applicant: Gerresheimer Glas GmbH, 40468 Düsseldorf (DE); STEVANATO GROUP S.P.A., 35017 Piombino Dese (PD) (IT)
(72) Inventor: Hutter, Josef, 94333 Geiselhöring (DE); Lindner, Sandra, 92536 Pfreimd (DE); Lingl, Rainer, 92709 Moosbach (DE)
(74) Representative: Hofstetter, Schurack & Partner

(57) **Abstract**

For producing a component (1) with an opening (2) closed by a cover element (3), a molding tool (4, 5) comprising a first and a second tool part (4, 5) is provided. The molding tool (4, 5) is closed such that a mold cavity (7) is formed, wherein the cover element (3) is placed at a position in the mold cavity (7) corresponding to the opening (2) of the component (1). A piston (6) passing through the first tool part (4, 5) is inserted into the mold cavity (7) for defining the opening (2) of the component (1), wherein the cover element (3) is fixed in place between the second tool part (4, 5) and the piston (6). When the cover element (3) is fixed in place, a molding material (8) is injected into the mold cavity (7), wherein the cover element (3) is partially overmolded by the molding material (8).

## Description

The present invention is directed to an injection molding method, wherein a molding tool for molding a component comprising a first tool part and a second tool part is provided and the molding tool is closed such that a mold cavity is formed. The invention is further directed to a corresponding molding arrangement.

It is well known to use injection molding for manufacturing components having holes, in particular through-holes, or other openings. For some applications, such an opening may be closed by a cover element, such as a plastic membrane or plastic film. In conventional approaches, the component is first produced by means of injection molding and the cover element is attached to the component afterwards. The cover element is for example attached in by gluing or welding or similar methods. This may increase the complexity of the production process, the number of production steps or production stations and/or the turnaround time.

It is an objective of the present invention to provide a method for producing a component with an opening closed by a cover element, which overcomes said drawbacks at least partially.

This objective is achieved by the subject matter of the independent claim. Further implementations and preferred embodiments are subject matter of the dependent claims.

The invention is based on the idea to integrate the step of attaching the cover element to the component into the injection molding process. To this end, the cover element is placed inside the mold cavity and fixed in place by a piston passing through the molding tool. The cover element is then partially overmolded by the molding material injected into the mold cavity.

According to an aspect of the invention, an injection molding method for producing a component with an opening, wherein the opening is closed or, in other words, covered by a cover element. Therein, a molding tool, also denoted as mold, for molding the component and the cover element are provided. The molding tool comprises a first tool part and a second tool part. The molding tool is closed such that a mold cavity corresponding to the component with the opening to be produced is formed. Therein, the cover element is placed at a position in the mold cavity corresponding to the opening of the component. A piston passing through the first tool part is inserted into the mold cavity for defining the opening of the component, wherein the cover element is fixed in place by the piston, in particular between the molding tool and the piston, for example between the second tool part and the piston. When the cover element is fixed in place, in particular while the cover element is kept fixed in place by the piston, a molding material is injected into the mold cavity, wherein the cover element is partially overmolded by the molding material, in particular to attach or fix the cover element to a remaining part of the com ponent.

In particular, an injection molding machine is used for producing the component, in particular for closing the molding tool operating the piston and injecting the molding material. The injection molding machine comprises, in particular, an injection unit the molding tool and a clamp unit. In particular, the first tool part corresponds to an injection-side part of the molding tool and the second tool part corresponds to a clamp-side part of the molding tool or vice versa.

The molding material is, in particular, a plastic material. The plastic material may for example comprise or consist of polyethylene, PE, polypropylene, PP, acrylonitrile butadiene styrene, ABS, polybutylene terephthalate, PBT, polycarbonate, PC, polyoxymethylene, POM, acrylonitrile styrene acrylate, ASA, cyclic olefin polymer, COP, cyclic olefin copolymer, liquid crystal polymer, LCP, polyamide, PA, polystyrene, PS, thermoplastic elastomere, TPE, and/or thermoplastic polyurethane, TPU. Preferably, the plastic material comprises or consists of PE, PP, COP, TPE and/or TPU.

The cover element may be or comprise a membrane or film, in particular a flexible membrane or film and/or a plastic membrane or film. In other embodiments the cover element may be or comprise a rigid part, for example a rigid plate.

The cover element may be placed at the corresponding position of the opening of the first tool part before the molding tool is closed in order to place the cover element in the mold cavity. It is also possible that the closing of the molding tool and the placement of the cover element are combined, for example by attaching the cover element to the second tool part or the first tool part before closing the molding tool and thereby placing the cover element accordingly when closing the molding tool.

The mold cavity is formed essentially between the first tool part and the second tool part. However, also the piston delimits the mold cavity in the region of the opening. In particular, the piston prevents the injected molding material to reach the region corresponding to the opening and thereby defines the opening. In other words, the position is positioned such that the opening is not reached by the injected molding material.

The piston, which may also be denoted as a plunger or a stamp, may be inserted before or after or while closing the molding tool. In particular, for inserting the piston, the piston is moved along a direction perpendicular to the cover element. In particular, the cover element is plane or essentially plane or comprises a plane or essentially plane portion. The direction of motion of the piston is, in particular, parallel to a normal direction to the plane or plane portion of the cover element.

By partially overmolding the cover element, which means that the injected molding material partially flows over the cover element, the cover element is fixed to the remaining part of the component, which is made of the molding material. Thus, the cover element does not need to be attached in a separate production step, which may decrease the complexity of the production process, the number of production steps or production stations and/or the turnaround time.

The method may be used for producing different types of components including medical devices, packaging or accessories for medical devices or medical equipment, and so forth. The method may also be used, for example, for producing an electromechanical assembly.

According to several embodiments, the cover element consists of or comprises a membrane or film, in particular a flexible membrane or film and/or a plastic membrane or film.

For example, the cover element consists of or comprises polyethylene or high-density polyethylene fibers, for example synthetic flashspun high-density polyethylene fibers, for example Tyvec^{®}.

According to several embodiments, the cover element consists of or comprises a metallic part and/or a glass part, for example a metal plate and/or a glass plate.

According to several embodiments, the cover element consists of or comprises a circuit carrier for mounting electronic components.

In other words, the circuit carrier is designed for mounting electronic components to the circuit carrier or the electronic components are mounted to the circuit carrier, in particular before the cover element is fixed on place and overmolded.

Consequently, the method may be used for producing an electromechanical assembly comprising the circuit carrier.

According to several embodiments, the cover element is attached to the second tool part before the molding tool is closed and the cover element is placed at the position corresponding to the opening of the component by closing the molding tool.

Thus, the process flow of the method is further simplified and the accuracy of the positioning of the cover element may be increased.

According to several embodiments, the cover element is attached to the second tool part by vacuum suction.

In this way a secure and accurate placement of the cover element may be achieved without interfering with the remaining process. For example, the second tool part may be equipped with a vacuum channel and a perforated surface portion for attaching the cover element to the second tool part by vacuum suction. When the molding tool has been closed or the cover element has been placed at the correct position, respectively, the vacuum suction may for example be released.

According to several embodiments, the cover element is fixed in place between the second tool part and the piston.

In particular, by fixing the cover element in place between the second tool part and the piston, the second tool part seals on the cover element. Thus, burr-free overmolding is achieved with increased reliability.

According to several embodiments, for fixing the cover element in place, in particular between the second tool part and the piston, the piston is positioned to a target position, in particular a target position relative to second tool part.

In particular, the target position may be selected such that, on the one hand, the cover element is not damaged by the piston, and, on the other hand, it is avoided that the injected molding material creeps into a gap between the cover element and the piston. Thus, burr-free overmolding is achieved with increased reliability.

According to several embodiments, the target position is a predefined target position.

According to several embodiments, a thickness of the cover element, in particular the membrane or film, is determined before the cover element is placed at the position corresponding to the opening of the component and the target position is determined depending on the thickness of the cover element.

In other words, the target position is determined prior to the application of the cover element in the molding tool. Consequently, the molding tool itself does not need to be adapted to accommodate a measurement device or the like.

In particular, the target position may be determined such that a gap between the piston and the second tool part is equal to the thickness of the cover element up to a predefined tolerance. In this way, mechanical damage of the cover element by the piston is avoided and at the same time it is avoided that the injected molding material creeps into a gap between the cover element and the piston also in case of a varying or per se unknown thickness of the cover element.

According to several embodiments, for positioning the piston, a current value of a measurement quantity, which depends on a current position of the piston is determined by a sensor arrangement and the piston is held in place if, in particular if and when, the current value of the measurement quantity corresponds to a predefined target value for the measurement quantity.

The target value is, in particular, selected or chosen such that the position of the piston corresponds to the target position if the measurement quantity corresponds to the target value. The underlying relation between the measurement quantity and the position of the piston may be determined in advance by calibration.

In particular, the current value of the measurement quantity may be monitored or, in other words, determined continuously or repeatedly, while the piston is being moved in order to position the piston and, when it is determined that the current value of the measurement quantity is equal to the target value, in particular up to a respective tolerance, the movement of the piston is stopped.

In particular, the target value for the measurement quantity may be determined such that a gap between the piston and the second tool part is equal to the thickness of the cover element up to a predefined tolerance. In this way, mechanical damage of the cover element by the piston is avoided and at the same time it is avoided that the injected molding material creeps into a gap between the cover element and the piston also in case of a varying or per se unknown thickness of the cover element.

According to several embodiments, the measurement quantity is given by a pressure applied to the cover element by the piston.

In other words, the sensor arrangement comprises a pressure sensor, for example a piezoelectric pressure sensor, which is arranged and configured to measure the pressure applied to the cover element by the piston. If and when the current value of the pressure corresponds to a predefined target pressure, the piston is held in place.

The pressure applied to the cover element by the piston is particularly suitable for adjusting the position of the piston since it is a particularly reliable quantity regarding the potential risk for a mechanical damage of the cover element.

According to several embodiments, the pressure sensor, in particular piezoelectric pressure sensor, is arranged at or integrated into the second tool part such that a measurement tip of the pressure sensor is in contact with the cover element, in particular when the cover element is placed at a position in the mold cavity corresponding to the opening of the component.

In this way, the pressure sensor may be integrated in the molding tool without negatively affecting the molding process.

In particular, the pressure sensor is arranged at or integrated into the second tool part such that the measurement tip protrudes beyond a surface of the second tool part, which is in contact with the cover element. Depending on the dimensions of the cover element, in particular its thickness, and the component itself, the amount of protrusion may be chosen to ensure that the pressure is measured reliably and accurately and a damage of the cover element by the measurement tip is avoided. The amount of protrusion may for example lie in the range [0.005 mm, 0.05 mm] or in the range [0.01 mm, 0.03 mm] for some use cases.

According to several embodiments, the piston is positioned by pressing a press element against the piston.

In other words, the press element is positioned by pressing the press element against the piston and the piston is positioned by positioning the press element accordingly.

For example, the press element is positioned or moved for positioning the piston, respectively, by a servo drive including, for example, a servo motor, or by a hydraulic actuator or by a pneumatic actuator. Thereby, a particularly accurate positioning of the piston is achieved.

According to several embodiments, the press element consists of or comprises a wedge and the wedge is inserted between the piston and a stationary counterpart, in particular by a motorized drive, for example the servo drive, to press the wedge against the piston.

In this way, a particularly simple machine design and accurate positioning of the piston may be achieved.

According to several embodiments, the press element pressed against the piston by a spindle drive. For example, the spindle drive may comprise a motorized drive, for example the servo drive.

In this way, a particularly simple machine design and accurate positioning of the piston may be achieved.

According to a further aspect of the invention, a molding arrangement for injection molding for example for carrying out an injection molding method for producing a component with an opening closed by a cover element, in particular an injection molding method according to the invention, is provided. The molding arrangement comprises a molding tool for molding the component comprising a first tool part and a second tool part.

The molding arrangement comprises a tool drive for closing the molding tool such that a mold cavity is formed, wherein the cover element is placeable at a position in the mold cavity corresponding to the opening of the component, for example by a placing mechanism of the molding arrangement. The molding arrangement comprises a piston passing through the first tool part and a piston drive, which is configured to insert the piston into the mold cavity to define the opening of the component and to fix the cover element in place by the piston. The molding arrangement comprises an injection system, which is configured to inject a molding material into the mold cavity when the cover element is fixed in place.

The molding arrangement may be an injection molding machine or a part of an injection molding machine.

According to several embodiments, the second tool part comprises a vacuum channel and a perforated surface portion and the molding arrangement comprises a pump system, which is configured to generate a vacuum at the perforated surface portion for attaching the cover element to the second tool part.

According to several embodiments, the molding arrangement comprises a sensor arrangement, arranged and configured to measure a current value of a measurement quantity, which depends on a current position of the piston. The piston drive is configured to hold the piston in place if the current value of the measurement quantity corresponds to a predefined target value.

According to several embodiments, the sensor arrangement comprises a pressure sensor, in particular a piezoelectric pressure sensor, which is arranged to measure a pressure applied to the cover element by the piston as the measurement quantity.

According to several embodiments, the pressure sensor is arranged at or integrated into the second tool part, for example such that a measurement tip of the pressure sensor may be brought into contact with the cover element.

According to several embodiments, the piston drive comprises a press element and the piston drive is configured to press the press element against the piston.

For example, the piston drive may comprise a spindle drive for pressing the element against the piston or the press element may be a wedge, which is inserted by the piston drive between the piston and a stationary counterpart to press the wedge against the piston.

According to several embodiments, the piston drive comprises a servo drive or a servo motor, which is configured to move the press element for pressing the press element against the piston.

Further embodiments of the molding arrangement according to the invention follow directly from the various embodiments of the injection molding method according to the invention and vice versa. In particular, individual features and corresponding explanations as well as advantages relating to the various embodiments of the injection molding method according to the invention can be transferred analogously to corresponding embodiments of the molding arrangement according to the invention. In particular, the molding arrangement according to the invention is configured to carry out the injection molding method according to the invention. In particular, the molding arrangement according to the invention carries out the injection molding method according to the invention.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- Fig. 1 to Fig. 5: show schematic illustrations of steps of an exemplary embodiment of an injection molding method according to the invention;
- Fig. 6 and Fig. 7: show schematic illustrations of steps of a further exemplary embodiment of an injection molding method according to the invention;
- Fig. 8: shows a schematic illustration of a step of a further exemplary embodiment of an injection molding method according to the invention;
- Fig. 9: shows a schematic illustration of a step of a further exemplary embodiment of an injection molding method according to the invention;
- Fig. 10: shows a schematic illustration of a step of a further exemplary embodiment of an injection molding method according to the invention; and
- Fig. 11: shows a schematic illustration of a step of a further exemplary embodiment of an injection molding method according to the invention.

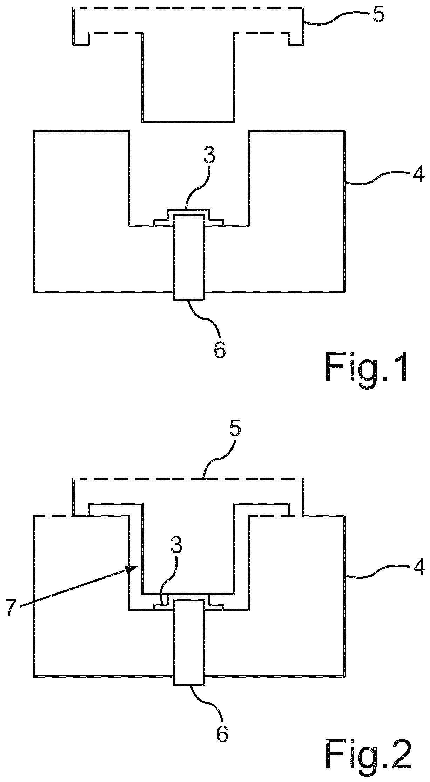

In the figures Fig. 1 to Fig. 5, steps of an exemplary embodiment of an injection molding method for producing a component 1 with an opening 2 closed by a cover element 3 according to the invention, in particular carried out by means of an injection molding arrangement according to the invention, are illustrated schematically.

As depicted in Fig. 1, a molding tool 4, 5 for molding the component 1 comprising a first tool part 4, for example an injection-side tool part, and a second tool part 5, for example a clamp-side tool part, and the cover element 3 are provided. The cover element 3 may for example be a plastic membrane.

The molding tool 4, 5 is closed such that a mold cavity 7 is formed, wherein the cover element 3 is placed at a position in the mold cavity 7 corresponding to the opening 2 of the component 1, as shown for example in Fig. 2. A piston 6 passing through the first tool part 4 is inserted into the mold cavity 7 for defining the opening 2 of the component 1, wherein the cover element 3 is fixed in place by the piston 6, in particular between the piston 6 and the second tool part 5, as shown for example in Fig. 2.

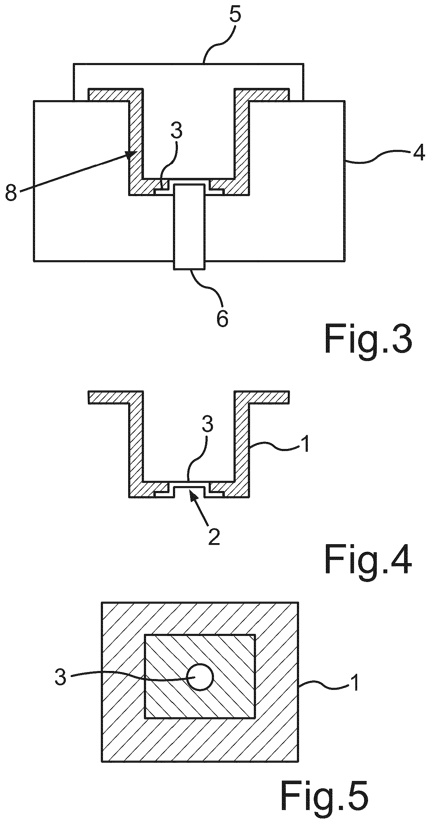

When the cover element 3 is fixed in place, a molding material 8, in particular a molten plastic material, is injected into the mold cavity 7, wherein the cover element 3 is partially overmolded by the molding material 8, as shown in Fig. 3. Then the molding tool 4, 5 is opened and the component 1 is ejected. The resulting component 1 including the opening 2 closed by the cover element 3 is shown schematically in a side view in Fig. 4 and in a top view in Fig. 5.

The injection may take place at any suitable point of the mold cavity 7. The respective position may be determined in advance using a simulation.

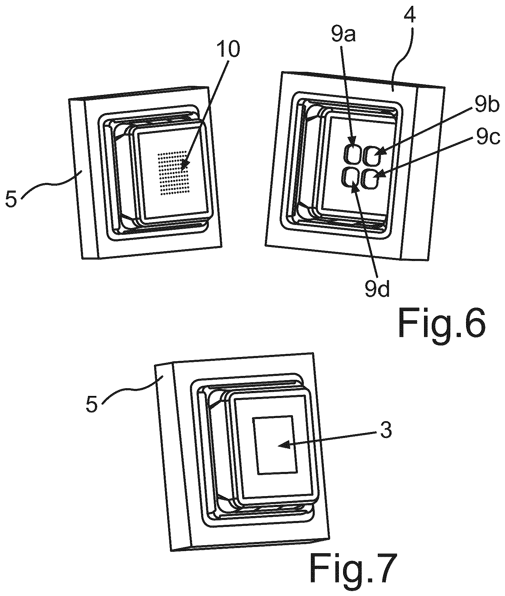

Fig. 6 shows a mold tool 4, 5 for use in a further exemplary embodiment of an injection molding method according to the invention.

In this embodiment, the component 1 shall for example comprise four openings 2, which is reflected by four respective openings 9a, 9b, 9c, 9d in the first tool part 4. The explanations in the following hold, however, analogously for a different number of openings 2 as well.

For example, the second tool part 5 may comprise a perforated surface portion 5 facing the openings 9a, 9b, 9c, 9d of the first tool part 4 when the molding tool 4, 5 is closed. As illustrated in Fig. 7, this may be used to attach the cover element 3 to the perforated surface portion 5 by vacuum suction before the molding tool 4, 5 is closed and the cover element 3 is placed at the position corresponding to the opening 2 of the component 1 by closing the molding tool 4, 5.

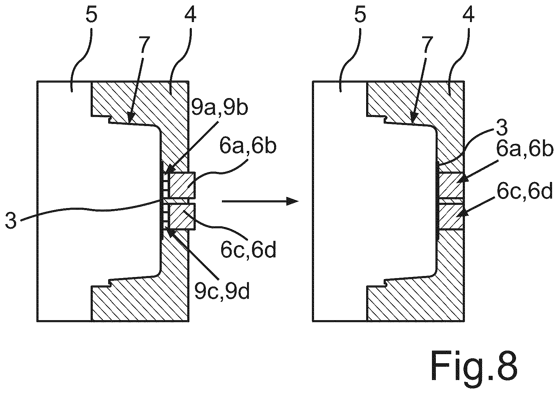

For fixing the cover element 3 in place, the piston 6 of Fig. 1 to Fig. 3 or respective pistons 6a, 6b, 6c, 6d for each of the openings 9a, 9b, 9c, 9d in the first tool part 4 of Fig. 6 is positioned or are position to respective target positions, as illustrated for example in Fig. 8. On the left side in Fig. 8, the pistons 6a, 6b, 6c, 6d are not yet in contact with the cover element, while they are in their target positions and in contact with the cover element 3 on the right side of Fig. 8. By positioning the piston 6 or the pistons 6a, 6b, 6c, 6d in the target position or target positions, respectively, it is ensured that the molding material 8 does not creep into a gap between the piston 6 or the pistons 6a, 6b, 6c, 6d, respectively, and the cover element 3.

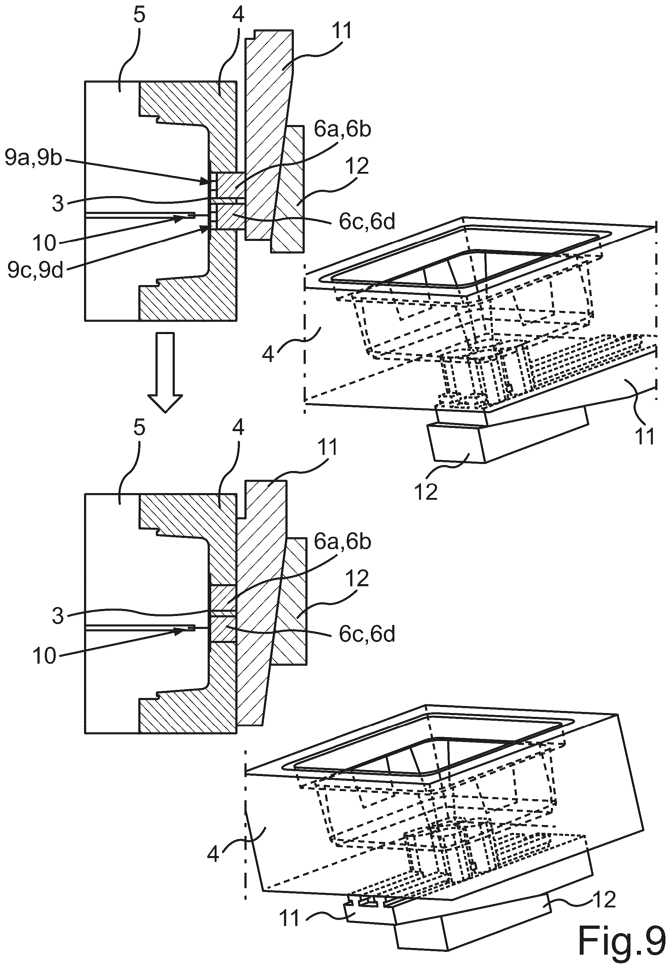

The piston 6 or the pistons 6a, 6b, 6c, 6d, respectively, may be moved by different types of driving mechanism. For example, a wedge 11 may be inserted between the piston 6 or pistons 6a, 6b, 6c, 6d and a stationary counterpart 12 to press the wedge 11 against the piston 6 or pistons 6a, 6b, 6c, 6d, respectively, as shown schematically in Fig. 9.

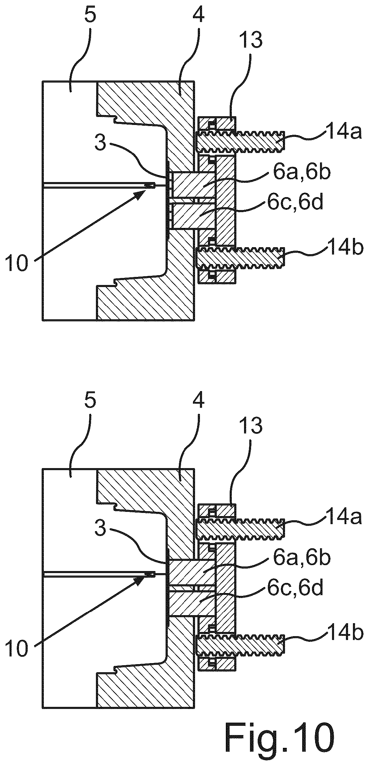

Alternatively, a plate 13 may be pressed against the piston 6 or pistons 6a, 6b, 6c, 6d by a spindle drive comprising one or more spindles 14a, 14b, as shown schematically in Fig. 10.

In order to determine whether a piston 6, 6a, 6b, 6c, 6d is in the respective target position, the thickness of the cover element 3 may be determined before and the target position may be determined depending on the thickness of the cover element 3, for example such that the gap between the piston 6, 6a, 6b, 6c, 6d and the second tool part 5 is equal to the thickness of the cover element 3 up to a respective tolerance. A servo drive may be used to position the piston 6, 6a, 6b, 6c, 6d accordingly.

In particular, suitable measures may be taken to ensure that the injection pressure cannot push the locating piston 6, 6a, 6b, 6c, 6d backwards. In the example of Fig. 9, pictures, the support is provided by a wedge with an angle that is smaller than the self-locking.

Alternatively, a current value of a measurement quantity, which depends on a current position of the piston 6, 6a, 6b, 6c, 6d, may be determined by a sensor arrangement and the piston 6, 6a, 6b, 6c, 6d is held in place if the current value of the measurement quantity corresponds to a predefined target value.

The sensor arrangement may for example comprise a pressure sensor 10, a strain gauge, a lightguide, a laser sensor, an inductive sensor, an ultrasonic sensor or a hydraulic or pneumatic force displacement measuring system.

The example of a pressure sensor 10, in particular a piezoelectric pressure sensor, is depicted schematically in figures Fig. 9 and Fig. 10. The pressure sensor 10 is for example integrated in the second tool part 5 such that a measurement tip of the pressure sensor 10 is in contact with the cover element 3. To this end, the measurement tip of the pressure sensor 10 may for example protrude over the surface of the second tool part 5 by 0.01 mm - 0.03 mm.

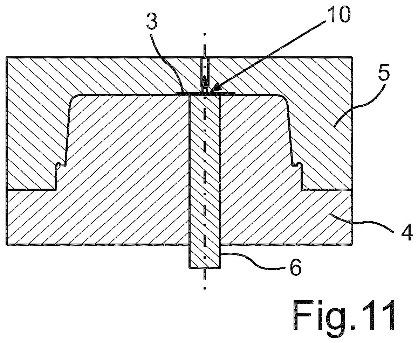

In the examples described so far, the first tool part 4 was depicted as the injection-side tool part and the second tool part 5 was depicted as the clamp-side tool part. This is, however, not mandatory. In the example of Fig. 11, the first tool part 4 is the clamp-side tool part and the second tool part 5 is the injection-side tool part. In this case, the piston 6 passes through the clamp-side tool part and, if applicable, the pressure sensor 10 may for example be integrated in the injection-side tool part.

As explained, the invention provides a possibility to produce a component with an opening closed by a cover element by means of injection molding, which overcomes drawbacks of known methods at least partially.

In some embodiments, the problem of varying a thickness of the cover element in view of process stability is addressed. A movable piston or sealing plunger is installed in the molding tool.

The piston may be for example be moved forwards and backwards. In some embodiments, this is achieved via a laterally moveable wedge. The wedge is designed with an angle that is beyond self-locking. Forces caused by spotting or injection pressure can therefore not move the wedge.

In some embodiments, the wedge is driven by a servo system, for example an electronic or hydraulic or pneumatic servo system. This allows it to stop the piston in any intermediate position.

### REFERENCE SIGNS:

- 1: component
- 2: opening
- 3: cover element
- 4: molding tool
- 5: molding tool
- 6: piston
- 7: mold cavity
- 8: molding material
- 9: opening
- 10: pressure sensor
- 11: wedge
- 12: stationary counterpart
- 13: press element
- 14: spindle drive

## Claims

1. Injection molding method for producing a component (1) with an opening (2) closed by a cover element (3), wherein
- a molding tool (4, 5) for molding the component (1) comprising a first tool part (4, 5) and a second tool part (4, 5) is provided;
- the molding tool (4, 5) is closed such that a mold cavity (7) is formed, wherein the cover element (3) is placed at a position in the mold cavity (7) corresponding to the opening (2) of the component (1);
- a piston (6, 6a, 6b, 6c, 6d) passing through the first tool part (4, 5) is inserted into the mold cavity (7) for defining the opening (2) of the component (1), wherein the cover element (3) is fixed in place by the piston (6, 6a, 6b, 6c, 6d); and
- when the cover element (3) is fixed in place, a molding material (8) is injected into the mold cavity (7), wherein the cover element (3) is partially overmolded by the molding material (8).

2. Injection molding method according to claim 1, wherein the cover element (3) is attached to the second tool part (4, 5) before the molding tool (4, 5) is closed and the cover element (3) is placed at the position corresponding to the opening (2) of the component (1) by closing the molding tool (4, 5).

3. Injection molding method according to claim 2, wherein the cover element (3) is attached to the second tool part (4, 5) by vacuum suction.

4. Injection molding method according to claim 1, wherein the cover element (3) is fixed in place between the second tool part (4, 5) and the piston (6, 6a, 6b, 6c, 6d) and/or by fixing the cover element (3) in place between the second tool part (4, 5) and the piston (6, 6a, 6b, 6c, 6d), the second tool part (4, 5) seals on the cover element (3).

5. Injection molding method according to one of the preceding claims, wherein, for fixing the cover element (3) in place, the piston (6, 6a, 6b, 6c, 6d) is positioned to a target position.

6. Injection molding method according to claim 5, wherein a thickness of the cover element (3) is determined before the cover element (3) is placed at the position corresponding to the opening (2) of the component (1) and the target position is determined depending on the thickness of the cover element (3).

7. Injection molding method according to claim 5, for positioning the piston (6, 6a, 6b, 6c, 6d), a current value of a measurement quantity, which depends on a current position of the piston (6, 6a, 6b, 6c, 6d), is determined by a sensor arrangement (10) and the piston (6, 6a, 6b, 6c, 6d) is held in place if the current value of the measurement quantity corresponds to a predefined target value.

8. Injection molding method according to claim 7, wherein the measurement quantity is given by a pressure applied to the cover element (3) by the piston (6, 6a, 6b, 6c, 6d).

9. Injection molding method according to claim 8, wherein to determine the pressure, a pressure sensor (10) is arranged at or integrated into the second tool part (4, 5) such that a measurement tip of the pressure sensor (10) is in contact with the cover element (3).

10. Injection molding method according to one of the preceding claims, wherein the piston (6, 6a, 6b, 6c, 6d) is positioned by pressing a press element (11, 13) against the piston (6, 6a, 6b, 6c, 6d).

11. Injection molding method according to claim 10, wherein
- the press element (11, 13) comprises a wedge (11) and the wedge (11) is inserted between the piston (6, 6a, 6b, 6c, 6d) and a stationary counterpart (12) to press the wedge (11) against the piston (6, 6a, 6b, 6c, 6d); or
- the press element (11, 13) pressed against the piston (6, 6a, 6b, 6c, 6d) by a spindle drive (14a, 14b).

12. Injection molding method according to one of claims 10 or 11, wherein the press element (11, 13) is moved by a servo drive or a hydraulic actuator or a pneumatic actuator.

13. Injection molding method according to one of the preceding claims, wherein
- the cover element (3) consists of or comprises a plastic membrane or a plastic plate; and/or
- the cover element (3) consists of or comprises polyethylene; and/or
- the cover element (3) consists of or comprises high-density polyethylene fibers; and/or
- the cover element (3) is a metal plate or a glass plate; and/or
- the cover element (3) consists of or comprises a circuit carrier for mounting electronic components.

14. Injection molding method according to one of the preceding claims, wherein the molding material (8) is a plastic material.

15. Molding arrangement for injection molding for carrying out an injection molding method for producing a component (1) with an opening (2) closed by a cover element (3), the molding arrangement comprising
- a molding tool (4, 5) for molding the component (1) comprising a first tool part (4, 5) and a second tool part (4, 5);
- a tool drive for closing the molding tool (4, 5) such that a mold cavity (7) is formed, wherein the cover element (3) is placeable at a position in the mold cavity (7) corresponding to the opening (2) of the component (1);
- a piston (6, 6a, 6b, 6c, 6d) passing through the first tool part (4, 5) and a piston drive, which is configured to insert the piston (6, 6a, 6b, 6c, 6d) into the mold cavity (7) to define the opening (2) of the component (3) and to fix the cover element (3) in place by the piston (7); and
- an injection system, which is configured to inject a molding material (8) into the mold cavity (7) when the cover element (3) is fixed in place.
